# EUROPÄISCHE PATENTANMELDUNG

(11) **EP 2 002 878 A1**
(43) Veröffentlichungstag der Anmeldung: **17.12.2008**
(21) Anmeldenummer: 08010114.0
(22) Anmeldetag: 03.06.2008
(51) Int. Cl.: B01D 53/85

(54) **Vorrichtung zur Bereitstellung einer Stoffaustauschfläche und eines Biofilms für die elektrisch-biologische Abgasreinigung**

(30) Priorität: 05.06.2007 DE 102007026267
(71) Anmelder: Junker-Filter GmbH, 74889 Sinsheim (DE)
(72) Erfinder: Junker, Jürgen, 74889 Sinsheim (DE)
(74) Vertreter: Laufhütte, Dieter

(57) **Zusammenfassung**

Die Erfindung betrifft eine Vorrichtung zur Bereitstellung einer Stoffaustauschfläche und eines Biofilms für die elektrisch-biologische Abgasreinigung. Erfindungsgemäß wird eine Vielzahl von parallelen, in gleichmäßigem Abstand angeordneten Oberflächen zu einer blockartigen Struktur zusammengefaßt.

## Beschreibung

Die Erfindung betrifft eine Vorrichtung zur Bereitstellung einer Stoffaustauschfläche und eines Biofilms für die elektrisch-biologische Abgasreinigung.

Elektroabscheider werden eingesetzt, um Aerosole aus Gasen abzuscheiden. Soweit es sich dabei um feste Aerosole (Stäube) handelt, müssen die Niederschlagselektroden zur Entfernung der abgeschiedenen Stäube regelmäßig abgereinigt werden, da zu starke Staubablagerungen die Funktion des Elektroabscheiders beeinträchtigen. Ein bekanntes Verfahren hierfür sind die Nass-Elektroabscheider, bei denen die Elektroden durch Bespülen oder Besprühen mit einer Flüssigkeit gereinigt werden. Nass-Elektroabscheider sind besonders auch zur Abscheidung von stark anhaftenden oder klebrigen Stäuben geeignet.

Berieselte Schüttungen oder Packungen sind bekanntermaßen geeignet, um gasförmige Verunreinigungen aus einer Gasströmung abzuscheiden. In den meisten Fällen geschieht dies, indem die gasförmigen Verunreinigungen in der Flüssigkeit absorbiert oder durch eine chemische Reaktion gebunden werden. Daneben sind auch Vorrichtungen bekannt, bei denen die berieselte Schüttung oder Packung mit einem Biofilm bewachsen ist, der biologisch abbaubare Gase aufnimmt. Solche Abscheider werden insbesondere auch zur Geruchsminderung eingesetzt.

Weiterhin sind auch Verfahren zur Reinigung von Abgasen bekannt, bei denen die Wirkprinzipien des Elektroabscheiders und der berieselten Schüttung kombiniert sind.

Bei einem Ionisationswäscher der Fa. Ceilcote / AirCure wird die zu reinigende Abgasströmung jeweils mehrmals nacheinander durch einen Platten-Elektroabscheider und durch eine berieselte Schüttung hindurchgeführt. Dabei wird das Aerosol überwiegend auf den Niederschlagselektroden abgeschieden, aber ein Anteil von geladenen Aerosolteilchen wird durch die Strömung bis in die berieselte Schüttung getragen und dort abgeschieden. Dagegen ist die Schüttung so weit von den Elektroden entfernt, dass keine Beeinflussung der Stoffaustauschvorgänge in der berieselten Schüttung durch die elektrische Entladung zu erwarten ist.

Bei einem bio-elektrischen Geruchsabscheider gemäß der DE 103 19 351 A1 dagegen befindet sich eine Packung oder Schüttung, die als Niederschlagelektrode und zugleich als Substrat für einen Biofilm dient, in unmittelbarer Nähe der Entladungselektroden, so dass der entstehende elektrische Wind in die Schüttung oder Packung eindringt und dort das Wachstum des Biofilms und die biologische Abscheidung von gasförmigen Abgas-Komponenten unterstützt.

Die aus der Destillationstechnik und von Gaswäschen bekannten Füllkörperschüttungen und strukturierten Packungen sind aber nur bedingt geeignet, um die Anforderungen der bio-elektrischen Gasreinigung zu erfüllen. Ausgehend hiervon sind nun folgende Aufgabenstellungen zu lösen:
1. Die Struktur soll eine möglichst große Oberfläche für den Stoffaustausch und das Wachstum des Biofilms besitzen.
2. Die Struktur soll in Richtung der durch den Abscheider verlaufenden Gasströmung einen möglichst geringen Druckverlust aufweisen.
3. Die Struktur soll ein möglichst tiefes Eindringen des von den Sprühelektroden ausgehenden elektrischen Windes ermöglichen.
4. Die Struktur soll eine hohe Belastung durch das Gewicht des Biofilms aufnehmen können.
5. Die Struktur soll so beschaffen sein, dass ein zu stark gewordener Biofilm von selbst abgleitet oder durch Abspülen oder Bedüsen mit Wasser einfach und ohne Verstopfungsgefahr entfernt werden kann.
6. Die Struktur soll so beschaffen sein, dass die Oberflächen durch Wasser leicht benetzbar sind und dass beim Abreinigen stets eine Grundschicht des Biofilms auf der Oberfläche verbleibt.

Die vorgenannten Aufgaben werden durch eine Vorrichtung zur Bereitstellung einer Stoffaustauschfläche und eines Substrates für einen Biofilm nach den Merkmalen des Anspruchs 1 gelöst.

Demnach werden diese Anforderungen erfüllt durch eine Struktur aus flächigen Elementen, die in großer Anzahl und in gleichmäßigem Abstand parallel angeordnet sind, so dass ein blockförmiges Volumen aufgespannt wird, das in vertikaler Richtung und in einer horizontalen Richtung eine sehr hohe Durchlässigkeit für die Strömung besitzt.

Der Block wird so genutzt, dass durch Transport in vertikaler Richtung der Biofilm mit Flüssigkeit benetzt und ausgetragen werden kann, während die Anströmung mit dem zu reinigenden Abgas sowohl in vertikaler wie auch in horizontaler Richtung geführt werden kann, und die Beaufschlagung mit dem elektrischen Wind typischerweise in horizontaler Richtung erfolgt.

Bevorzugte Ausführungsformen ergeben sich aus den sich anschließenden Unteransprüchen.

Die flächigen Elemente können selbsttragende Platten sein, die durch Abstandhalter fest miteinander verbunden sind. Die Platten können aus Metall, Keramik, Kunststoff, Holzwerkstoffen oder Fasermaterialien bestehen und können durch eine Wölbung, eine Prägung oder Wellung strukturiert sein, um die Steifigkeit zu erhöhen.

Alternativ können die flächigen Elemente aus biegeschlaffen Materialien wie Textil, Folien oder Siebgeweben bestehen, die in einem Rahmen allseitig fest aufgespannt sind, oder die nur an einer Seite fest eingespannt sind und dadurch in der Strömung flattern können. Die Flatterbewegung eines biegeschlaffen Materials ist besonders geeignet, um das Anwachsen des Biofilms zu begrenzen. Eine solche Ausführung ist insbesondere in Verbindung mit einer abwärts gerichteten Strömung des zu reinigenden Abgases geeignet.

Weiterhin kann eine erfindungsgemäße Struktur mit bevorzugter Durchlässigkeit in zwei Raumrichtungen auch aus breiteren und schmaleren Streifen eines steifen Flächenmaterials zusammengesteckt oder zusammengeschweißt werden, wobei die schmaleren Streifen hier die Funktion der Abstandhalter übernehmen, ohne die Durchlässigkeit der Struktur zu sehr zu verringern.

Zur Abreinigung von abgeschiedenem Staub oder überschüssigem Biofilm werden bevorzugt mit Wasser beaufschlagte Düsen eingesetzt, die oberhalb des Blockes angeordnet sind.

Bei der Abreinigung mit Düsen tritt das Problem auf, dass eine besonders starke Ablagerung von Staub und ein besonders starkes Wachstum des Biofilms an den den Elektroden zugewandten Außenseiten des Blocks stattfindet. Andererseits werden diese Außenseiten nicht direkt vom Sprühstrahl der Düsen erreicht, so dass hier die Gefahr einer unzureichenden Abreinigung und eines völligen Verschlusses der Flächen besteht. Vorzugsweise ist es deshalb vorgesehen, dass durch eine geeignete Gestaltung der Oberseite des Blocks in Verbindung mit der Anordnung der Düsen ein besonders hoher Anteil der Sprühflüssigkeit in den Außenbereich des Blockes geleitet wird.

Weitere Vorteile, Einzelheiten und Merkmale der Erfindung werden anhand der folgenden Figuren näher erläutert. Es zeigen:
- Figur 1a, b:: eine erste erfindungsgemäße Anordnung flächiger Biofilm-Träger in zwei Ausführungen;
- Figur 2a, b:: eine zweite erfindungsgemäße Vorrichtung flächiger Biofilm-Träger in zwei Ausführungen;
- Figur 3:: ein drittes Ausführungsbeispiel für eine erfindungsgemäße Vorrichtung;
- Figur 4:: ein viertes Ausführungsbeispiel für eine erfindungsgemäße Vorrichtung;
- Figur 5:: ein fünftes Ausführungsbeispiel für eine erfindungsgemäße Vorrichtung;
- Figur 6:: einen Querschnitt durch einen Biofilm-Träger-Block mit einer darüber angeordneten Düse und
- Figur 7:: verschiedene bevorzugte Ausführungen eines Tropfenabscheiders in Verbindung mit verschiedenen Ausführungen von Biofilm-Trägerplatten.

### Ausführungsbeispiel 1

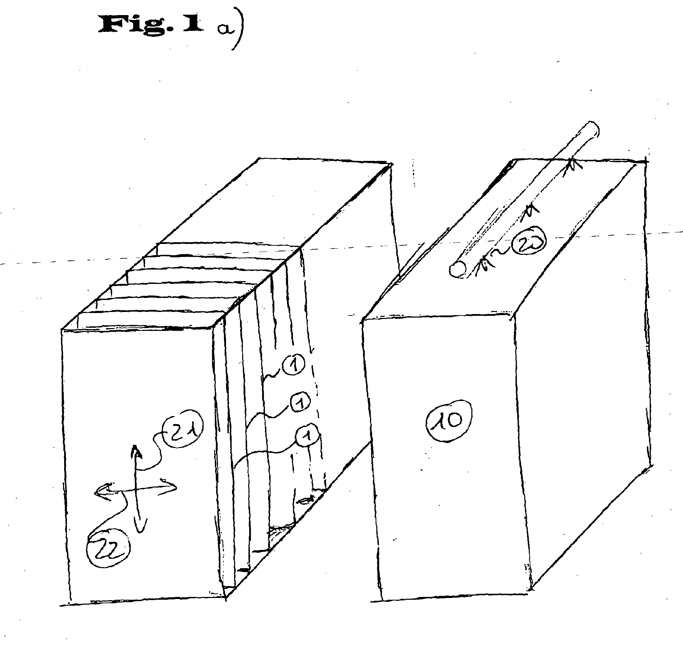

Figur 1a zeigt eine Anordnung von flächigen Biofilm-Trägern 1 die zu einem Block 10 zusammengefaßt sind und durch Düsen 20 berieseit werden. Der Block von Biofilm-Trägern hat dadurch eine bevorzugte Durchlässigkeit in vertikaler Richtung 21 und horizontaler Richtung 22.

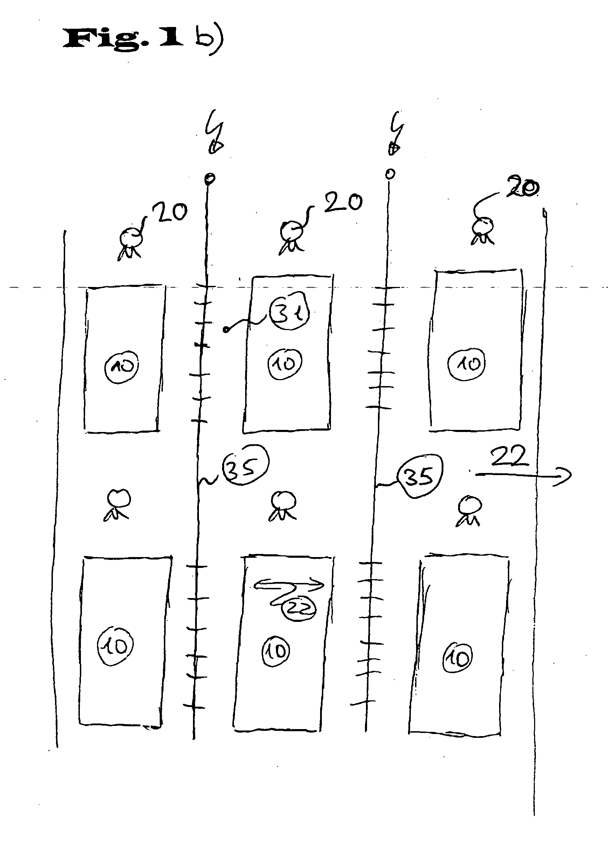

Figur 1 b zeigt einen Schnitt durch eine größere Anlage mit einer größeren Zahl von Blöcken 10 und Berieselungsdüsen 20, die in einer bio-elektrischen Gasreinigungsanlage nebeneinander und übereinander angeordnet sind. Zwischen den Blöcken entstehen so vertikale Gassen 31, in deren Mitte sich die Hochspannungselektroden 35 befinden. Der von den Hochspannungselektroden ausgehende elektrische Wind kann so in horizontaler Richtung 22 besonders gut in die Blöcke eindringen.

### Ausführungsbeispiel 2

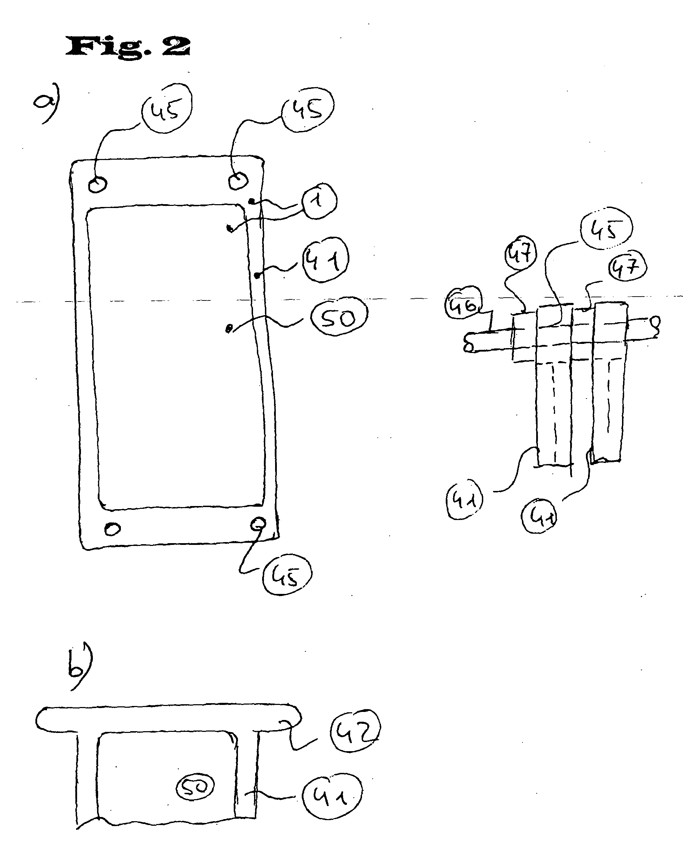

Figur 2a zeigt einen flächigen Biofilm-Träger 1, der aus einem steifen Rahmen 41 und einem darin eingespannten biegeschlaffen Biofilm-Trägermaterial 50 besteht. Der Rahmen 41 enthält Bohrungen 45, durch die die Trägerplatten mittels Zugstangen 46 und Abstandhaltern 47 zu Blöcken zusammengefaßt werden können.

Alternativ kann der Rahmen 41 z.B. seitliche Laschen 42 besitzen (Figur 2b), mit denen die Rahmen in einer gemeinsamen Halterung befestigt und zu einem Block zusammengefaßt werden.

### Ausführungsbeispiel 3

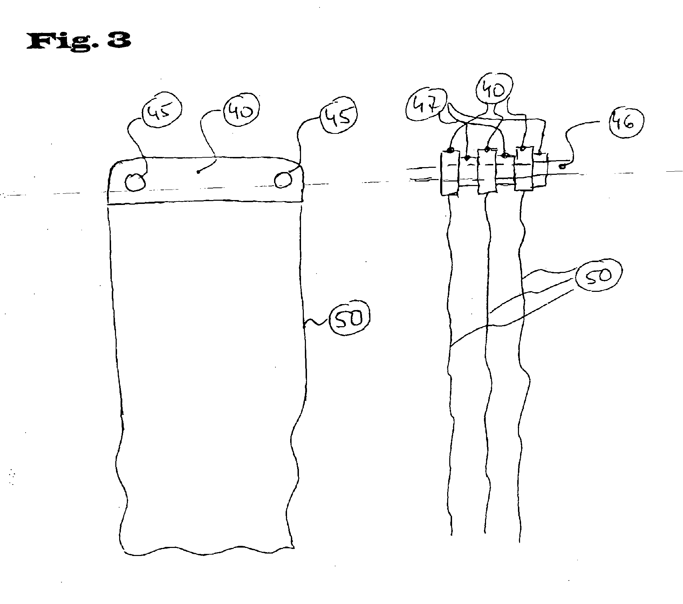

Figur 3 zeigt einen flächigen Biofilm-Träger 1, bestehend aus einem biegeschlaffen Biofilm-Trägermaterial 50, das am oberen Ende einseitig in einer Trägerleiste 40 eingespannt ist und am unteren Ende in der Strömung flattern kann. Die Trägerleiste 40 enthält Bohrungen 45, durch die die Trägerplatten mittels Zugstangen 46 und Abstandhaltern 47 zu Blöcken zusammengefaßt werden können.

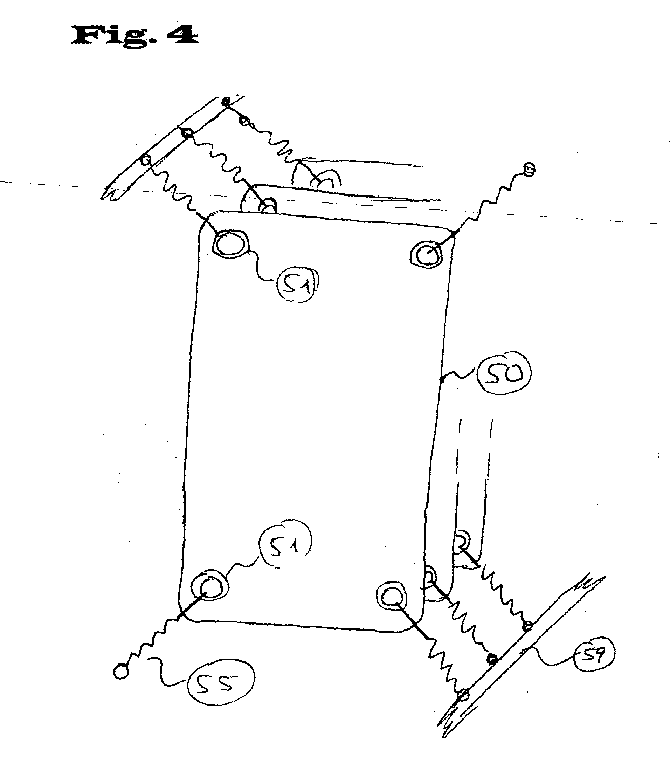

Figur 4 zeigt einen flächigen Biofilm-Träger 1, bestehend aus einem biegeschlaffen Biofilm-Trägermaterial 50, das mit Ösen 51 und elastischen Zugelementen 55 aufgespannt wird. Die blockartige Struktur 10 wird durch eine Vielzahl von solchen Trägern, die parallel in einem gemeinsamen Rahmen 59 aufgespannt sind, gebildet.

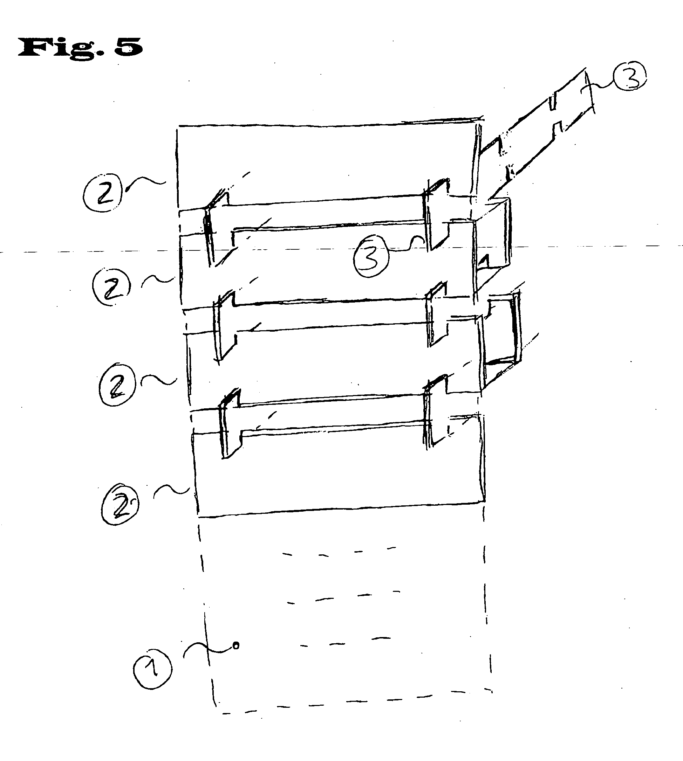

Figur 5 zeigt eine Ausführungsform, bei der der Biofilm-Träger 1 aus einzelnen Streifen 2 besteht, die in einer Ebene angeordnet sind. Durch senkrecht dazu verlaufende Abstandhalter-Streifen 3 werden die Streifen 2 innerhalb der Ebene und in den verschiedenen Ebenen miteinander zu einer Blockstruktur verbunden. An den Kontaktstellen können die Streifen 2 und die Abstandhalter-Streifen 3 durch Kleben, Schweißen oder durch Steckverbindungen miteinander verbunden werden. Figur 5 zeigt die besonders vorteilhafte Ausführung einer Steckverbindung.

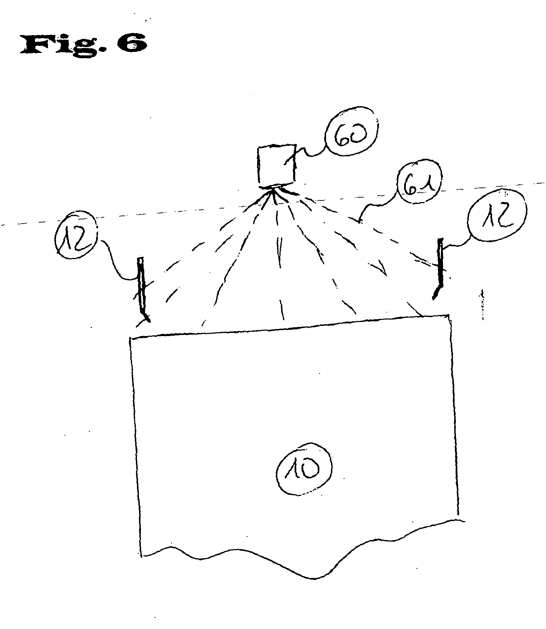

Figur 6 zeigt einen Querschnitt durch einen Biofilm-Träger-Block 10 mit einer darüber angeordneten Düse 60, wobei ein Teil des Sprühstrahls 61 durch Tropfenabscheider 12 in die Randbereiche des Blocks 10 geleitet wird.

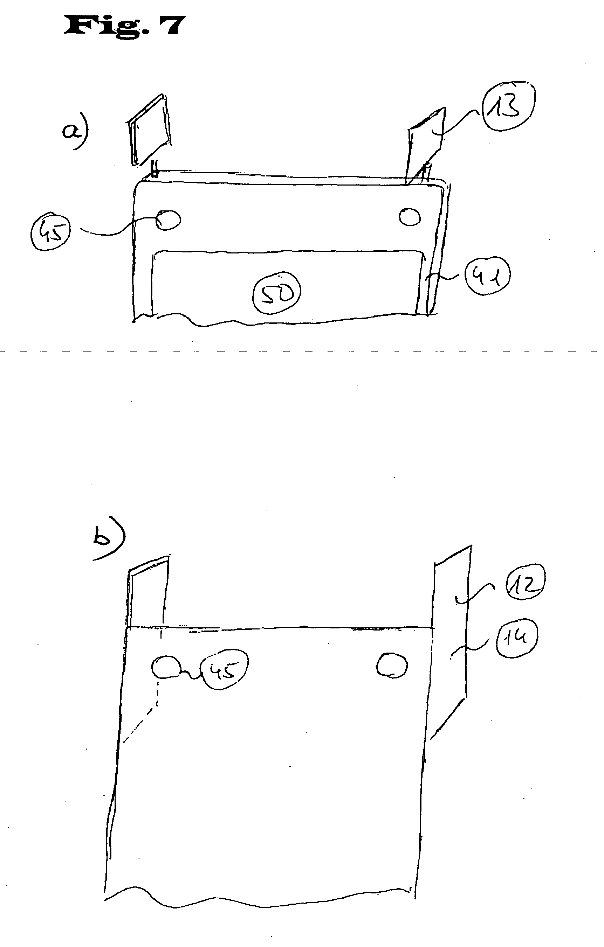

Figur 7 zeigt verschiedene bevorzugte Ausführungen des Tropfenabscheiders 12 in Verbindung mit verschiedenen Ausführungen der Biofilm-Trägerplatten.

Figur 7a zeigt Tropfenabscheider 12 aufgebaut aus einzelnen Plättchen 13, die jeweils an den oberen äußeren Kanten eines Rahmens 41 oder einer Leiste 40 befestigt sind.

Figur 7b zeigt Tropfenabscheider 12, die durch das Abkanten von seitlich an den Biofilm-Trägerplatten befindlichen Streifen 14 entstehen. Mit 45 sind wieder die Bohrungen bezeichnet, durch die das Biofilm-Trägermaterial 50 mittels Zugstangen 55 (hier nicht dargestellt) zusammengefaßt werden können.

## Patentansprüche

1. Vorrichtung zur Bereitstellung einer Stoffaustauschfläche und eines Substrates für einen Biofilm, **dadurch gekennzeichnet, dass** eine Vielzahl von parallelen, in gleichmäßigem Abstand angeordneten Oberflächen zu einer blockartigen Struktur zusammengefaßt ist.

2. Vorrichtung nach Anspruch 1, **dadurch gekennzeichnet, dass** die Oberflächen in Form von starren Platten bereitgestellt werden.

3. Vorrichtung nach Anspruch 1, **dadurch gekennzeichnet, dass** die Oberflächen in Form von Platten mit einer gewellten oder geprägten Oberflächenstruktur bereitgestellt werden.

4. Vorrichtung nach Anspruch 1, **dadurch gekennzeichnet, dass** die Oberflächen in Form von Platten mit einer gelochten Fläche bereitgestellt werden.

5. Vorrichtung nach Anspruch 1, **dadurch gekennzeichnet, dass** die Oberflächen in Form von Gitterstrukturen bereitgestellt werden.

6. Vorrichtung nach Anspruch 1, **dadurch gekennzeichnet, dass** die Oberflächen bereitgestellt werden in Form von flexiblen Flächenmaterialien.

7. Vorrichtung nach einem der Ansprüche 1 oder 6, **dadurch gekennzeichnet, dass** die SrücKe des Flächenmaterials an allen kanten durch Rahmen gespannt sind.

8. Vorrichtung nach einem der Ansprüche 1 oder 6, **dadurch gekennzeichnet, dass** die Stücke des Flächenmaterials an mindestens 3 Ecken durch elastische Aufhängungen in einen Rahmen gespannt sind.

9. Vorrichtung nach einem der Ansprüche 1 oder 6, **dadurch gekennzeichnet, dass** die Stücke des Flächenmaterials an 4 Ecken durch elastische Aufhängungen in einen Rahmen gespannt sind.

10. Vorrichtung nach einem der Ansprüche 1 oder 6, **dadurch gekennzeichnet, dass** die Stücke des Flächenmaterials nur mit einer Kante an einem Rahmen befestigt sind.

11. Vorrichtung nach Anspruch 9, **dadurch gekennzeichnet, dass** einseitig an einem Rahmen befestigte Stücke von Flächenmaterial herabhängen, so dass sie in einer abwärts gerichteten Strömung zu Flatterbewegungen angeregt werden.

12. Vorrichtung nach einem der Ansprüche 1 bis 11, **dadurch gekennzeichnet, dass** durch Tropfenabscheider am oberen äußeren Rand des Blocks von Biofilm-Substraten in Verbindung mit über dem Block angeordneten Düsen zur Spülung eine besonders hohe Flüssigkeits-Stromdichte am Rand des Blocks erreicht wird.

13. Vorrichtung nach Anspruch 12, **dadurch gekennzeichnet, dass** der Tropfenabscheider durch einen oder mehrere oberhalb vom äußeren Rand des Blocks angeordnete Streifen oder Lamellen gebildet wird.

14. Vorrichtung nach Anspruch 11 und 12, **dadurch gekennzeichnet, dass** der Tropfenabscheider durch einzelne an den äußeren oberen Ecken des Biofilmtragenden Flächenmaterials befestigte Plättchen gebildet wird.

15. Vorrichtung nach Anspruch 12, **dadurch gekennzeichnet, dass** der Tropfenabscheider durch seitlich abgefalzte Streifen des Biofilm-tragenden Flächenmaterials gebildet wird.

16. Elektrisch-biologische Abgasreinigung mit einer Vorrichtung zur Bereitstellung einer Stoffaustauschfläche und eines Substrats für einen Biofilm nach einem der Ansprüche 1 bis 15.
